# EUROPEAN PATENT SPECIFICATION

(11) **EP 2 193 307 B1**
(45) Date of publication and mention of the grant of the patent: **23.04.2014**
(21) Application number: 08798794.7
(22) Date of filing: 27.08.2008
(51) Int. Cl.: B21B 27/10, B21B 37/74, F17C 13/00

(54) **APPARATUS AND METHOD FOR PROVIDING CONDENSATION-AND FROST-FREE SURFACES ON CRYOGENIC COMPONENTS**
VORRICHTUNG UND VERFAHREN ZUR BEREITSTELLUNG VON KONDENSATIONS- UND FROSTFREIEN OBERFLÄCHEN AUF KRYOGENEN KOMPONENTEN
APPAREIL ET PROCÉDÉ SERVANT À PRODUIRE DES SURFACES SANS CONDENSATION ET SANS GIVRE SUR DES COMPOSANTS CRYOGÉNIQUES

(30) Priority: 28.08.2007 US 968479 P
(43) Date of publication of application: 09.06.2010
(73) Proprietor: Air Products and Chemicals, Inc., Allentown, PA 18195 (US)
(72) Inventor: ZURECKI, Zbigniew, Macungie, PA 18062 (US); KNORR, Robert, Ellsworth, Jr., Allentown, PA 18104 (US); GREEN, John, Lewis, Palmerton, PA 18071 (US)
(74) Representative: Andrae Westendorp
(86) International application number: PCT/US2008/074462
(87) International publication number: WO 2009/032688

(56) References cited:
- JP-A- 02 066 415
- US-A- 2 986 891
- US-A- 3 110 156
- US-A- 3 395 548
- US-A- 3 695 050
- US-A- 4 498 304
- US-A1- 2004 245 373
- US-A1- 2005 160 615
- US-A1- 2007 164 130

## Description

### BACKGROUND

In one respect, the present invention is directed to systems for delivering or spraying cryogenic coolants, and in particular, to providing frost-free or ice-free surfaces in such systems by utilizing a gas filled microporous envelope that encases selected plumbing with ambient or room-temperature inert gas. In another respect, the present invention is directed to systems for providing a purge gas to cryogenically-cooled sensors to cool and/or prevent frost thereon.

Surfaces that are chilled to cryogenic temperatures and exposed to ambient air quickly accumulate frost and ice because moisture in the ambient air condenses and freezes on the chilled surfaces. Surface frost and/or ice can create operational problems and safety hazards in cryogenic coolant systems.

There have been attempts to reduce or eliminate the buildup of frost and ice, including the use of insulating jackets, foams, and electrically heated surface pads. Such devices increase cost, size and weight of the cryogenic delivery system, reduce thermal efficiency, and make it difficult to retrofit existing apparatus. In addition, the frost reduction devices of the prior art have been unsuccessful in preventing frost/ice formation around the discharge nozzles of cryogenic spray devices. US 3,395,548 shows a tank for carrying liquefied gas cargo with a double huell and leakage indicators.

### SUMMARY OF THE INVENTION

In one respect, the invention comprises an apparatus including a cryogenic fixture that is adapted carry a cryogenic fluid and a casing that envelopes at least a portion of the cryogenic fixture, thereby defining a purge volume between the cryogenic fixture and the casing, the casing comprising at least one purge gas inlet and a membrane, the at least one purge gas inlet being adapted to be connected to a pressurized supply of a purge gas. The casing is configured so that when the purge gas is introduced into the purge volume through the at least one purge inlet at a pressure equal to or greater than a minimum operating pressure, at least some of the purge gas diffuses outwardly from the purge volume through the membrane.

In another respect, the invention comprises a method for preventing frost formation on a cryogenic fixture, the method comprising: supplying a cryogenic fluid to the cryogenic fixture; supplying a purge gas to a purge volume, the purge volume at least partially enveloping the cryogenic fixture, the purge volume being defined by a casing comprising a membrane that is gas-permeable; and diffusing the purge gas through the membrane.

In yet another respect, the invention comprises a method for operating a cryogenic fixture having a first portion that is exposed to an atmosphere having a relative humidity of at least 30%, the cryogenic fixture having a discharge nozzle located within the first portion, the method comprising continuously discharging a cryogenic fluid through the discharge nozzle for a period of 30 minutes without any significant frost formation on the first portion of the cryogenic fixture.

In yet another respect, the invention comprises an apparatus comprising a casing having a first opening formed thereon and at least one porous wall that extends into the first opening; a cryogenic spray bar located within the casing, the cryogenic spray bar having a discharge nozzle that is aligned with the first opening, the discharge nozzle having at least one opening, the cryogenic spray bar being adapted to discharge a cryogenic fluid through the discharge nozzle; a plenum contained within the casing, the plenum being in flow communication with the at least one porous wall. The at least one porous wall extends into the first opening and is located between the casing and the cryogenic spray bar, the at least one porous wall having a first and second portions which are located on opposing sides of each of the at least one opening of the discharge nozzle. The plenum and the at least one porous wall are configured so that at least some of the purge gas diffuses outwardly from the plenum through the at least one porous wall when the purge gas is supplied to the plenum at a pressure equal to or greater than a minimum operating pressure.

### BRIEF DESCRIPTION OF THE DRAWINGS

Figure 1 is a longitudinal cross-sectional view of a cryogenic fluid supply line showing one embodiment of the present invention;
Figure 2 is an isometric view showing an embodiment of a frost-free cryogenic spray bar;
Figure 3 is an isometric cross-section view of the spray bar in Figure 2;
Figure 4 is an isometric cross-section view of the spray bar in Figure 2;
Figure 5 is a transverse cross-section of the spray bar in Figure 2;
Figures 6A through 6C are transverse cross-sectional views showing alternative cryogenic spray bar configurations;
Figure 7 is a transverse cross-section of an embodiment of the invention comprising a sensor having a purge gas.
Figure 8 is a transverse cross-section of a system using sensors having a purge gas of this invention.
Figure 9 is a transverse cross-section of an embodiment having an integrated co-spraying device of this invention.
Figure 10 is a schematic view of a cryogenic delivery system incorporating frost-free plumbing in accordance with the teachings of the present invention.

### DETAILED DESCRIPTION OF THE INVENTION

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention. It being understood that various changes may be made in the function and arrangement of elements without departing from the spirit and scope of the invention, as set forth in the appended claims.

To aid in describing the invention, directional terms may be used in the specification and claims to describe portions of the present invention (e.g., upper, lower, left, right, etc.). These directional terms are merely intended to assist in describing and claiming the invention and are not intended to limit the invention in any way. In addition, reference numerals that are introduced in the specification in association with a drawing figure may be repeated in one or more subsequent figures without additional description in the specification in order to provide context for other features. In the drawings, cross-hatching in a sectional view indicates a microporous material and hatching in a sectional view indicates non-microporous material.

As used herein, the term "cryogenic fluid" is intended to mean a liquid, gas or mixed-phase fluid having a temperature less than -70 degrees C (203 degrees K). Examples of cryogenic fluids include liquid nitrogen (LIN), liquid oxygen (LOX), and liquid argon (LAR), liquid carbon dioxide and pressurized, mixed phase cryogens (e.g., a mixture of LIN and gaseous nitrogen).

As used herein, the term "cryogenic fixture" is intended to mean any type of apparatus or device which is designed to deliver a cryogenic fluid. Examples of cryogenic fixtures include, but are not limited to, supply pipes, tubes, flanges, elbows, tees, vapor vents, phase separators, vaporizers, spray heads, spray nozzles, valves, gauges and regulators. Although the present invention was developed for the purpose of preventing frost build-up on cryogenic fixtures, it could be advantageously used on any low-temperature device on which undesirable frost or excessive condensation forms.

As used herein, the term "discharge nozzle" is intended to mean one or more openings located on a cryogenic spray device through which the cryogenic fluid is discharged. The opening(s) may vary in shape from a circular hole to an elongated slot.

As used herein, the term "microporous membrane" refers to a material or membrane having open, and preferably uniformly distributed, micro-channels extending between the external surfaces of the membrane. In the context of this invention, a microporous material can have an average pore size up to about 500 micrometers.

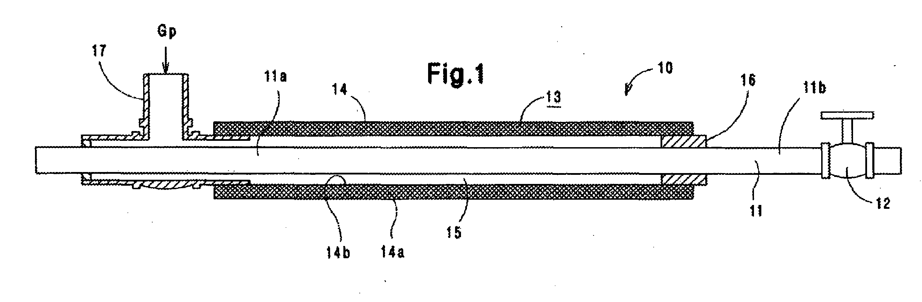

Referring to the drawings, Figure 1 is a sectional view of one embodiment of the present invention, which comprises a cryogenic fluid supply line 10. Supply line 10 comprises a stainless steel tube 11 through which flows a cryogenic fluid, such as liquid nitrogen (LIN) or liquid argon (LAR). A section 11a of the tube 11 is enveloped by a casing comprising a gas-permeable membrane 13 which is cylindrical in shape and encircles the tube 11. The membrane 13 comprises a wall 14 having an outer surface 14a and an inner surface 14b. The space between the inner surface 14b of the membrane 13 and the tube 11 defines a chamber or purge volume 15. The casing also includes a plug 16 at one end and a T-connection 17 at the other end, which seals the purge volume 15.

In this embodiment, the membrane 13 is a microporous, woven polyester fabric. There are, however, many alternate materials that could be used, including but not limited to, porous plastics (e.g., polyethylene and high-density polyethylene having an open pore size of about 10 micrometers), polymer, ceramic, and metallic foams having pore sizes as large as 500 micrometers and a pore fraction as high as 95% (by volume), and woven fabrics (e.g., cotton, nylon, glass felt, and ceramic fibers). In most applications a microporous material is preferred. In some applications, less thermally conductive metals, such as titanium alloy Ti-6V-4Al, could be used. In addition, other materials having a thermal conductivity of about 25 W / m K or less could be used. The preferred material will depend upon the specific application in which the membrane 13 is being used.

The membrane 13 is also preferably a hydrophobic material and/or has been treated with a hydrophobic agent, in order to prevent pore icing if the flow of purge gas Gp is or falls below a critical value and to reduce the likelihood of condensation on the outer surface 14a of the wall 14, which can lead to surface frosting.

Another important parameter in selecting the membrane material or membrane laminates is the velocity and the volume of the purge gas Gp passing through the membrane under normal operating conditions. It has been determined that, under typical North American office or manufacturing plant conditions (i.e., relatively stagnant air, typical North American moisture levels), a "face" velocity, i.e. the velocity of the purge gas Gp crossing the membrane 13, of at least 1 cm/second and a volumetric flow rate of the purge gas Gp of at least 1 cm/second/ per square centimeter of membrane surface area are preferred. This means that each square centimeter of the membrane 13 may exude at least 1 cubic centimeter of purge gas Gp per second. Under these conditions, the flow of dry purge gas Gp prevents the ambient, moisture carrying air on the discharge side of the membrane 13 from coming into contact with the outer surface 14a, which prevents frost from forming on the outer surface 14a even if the temperature of the outer surface 14a was to drop to cryogenic temperatures. The preferred purge gas Gp face velocity and volumetric flow rates would be higher for more humid ambient air and/or windy conditions.

A purge gas Gp is introduced at an elevated pressure into the purge volume 15 through the T-connection 17 (also called a gas inlet). The inlet pressure of the purge gas Gp is sufficient to overcome frictional losses in delivery tubing and fittings, fill the purge volume 15 and to cause the purge gas Gp to flow out of the purge volume 15 through the membrane 13. In this embodiment, the casing is configured so that the purge gas Gp will diffuse through the membrane 13 at the inlet pressure of 345 millibar (5psig) or higher. It should be understood that the internal pressure required for crossing the membrane will be less than the inlet pressure due to the aforementioned friction losses.

To be effective, the membrane 13 should act as a pressure barrier. In this embodiment, the pressure drop across the membrane 13 is preferably at least 2.5 millibars, assuming that the cryogenic fluid supply line 10 is carrying cryogenically cold nitrogen or argon and the purge gas Gp is supplied at roughly room temperature (e.g., 20-25 degrees C). The minimum preferred pressure drop is determined by the desire to maintain a relatively uniform outward flow of the purge gas Gp throughout the membrane 13, regardless of orientation, gravitational forces, winds, or air currents in the immediate area surrounding the membrane 13. Although there is no absolute upper limit for the pressure drop across the membrane 13, it is desirable to use membrane materials and membrane thicknesses that do not require unnecessarily high pressure differentials, which would require higher purge gas Gp pressures to achieve desirable flow characteristics. Increased gas pressure results in increased thermal conductivity, which would be counter-productive to the objectives of the present invention. In most applications, a pressure drop (positive gauge pressure) in the range of 2.5 to 500 millibars (0.25 to 50 kPa) is preferable.

As used herein, the term "minimum operating pressure" means the minimum pressure at which the purge gas Gp must be supplied to cause the purge gas Gp to diffuse through the membrane 13. As explained herein, the minimum operating pressure will vary from embodiment to embodiment of the invention due to, among other variables, differences in casing configuration, wall thickness, surface area and the size and volume of the interconnected pores in the membrane.

Preferably the composition of the purge gas Gp, including any minor components or impurities it carries, is selected so that it will not condense on the surface of a cryogenic fixture (e.g., cryogenic fluid supply line 10) in the normal operating pressure range of the purge volume 15. For this reason, it is preferable not to use carbon dioxide as a purge gas or purge gas additive with cryogenic fixtures carrying LIN or LAR. Similarly, it is preferable not to use Argon as a purge gas or purge gas additive with cryogenic members carrying LIN. For example, in this embodiment, gaseous nitrogen would be a suitable purge gas Gp for a tube 11 carrying LIN.

In addition, the purge gas Gp preferably has a low relative humidity (e.g., a relatively humidity corresponding to a dew point of less than -60 degrees C / 213 degrees K) so that water vapor from the purge gas Gp does not condense and/or freeze on the outer surface 14a of the membrane 13 or inside pore channels.

As discussed above, the flow rate of purge gas Gp through the gas-permeable membrane 13 is preferably sufficient to prevent ambient air from coming in contact with the outer surface 14a of the membrane 13, which prevents the formation of frost on the outer surface 14a of the membrane 13. The preferred flow rate may vary substantially in other embodiments of the present invention. Although small amounts of leakage (for example through the plug 16 and/or T-connection 17) may occur, it is preferable that substantially all of the purge gas that is supplied to the purge volume 15 flows out of the purge volume 15 through the membrane 13.

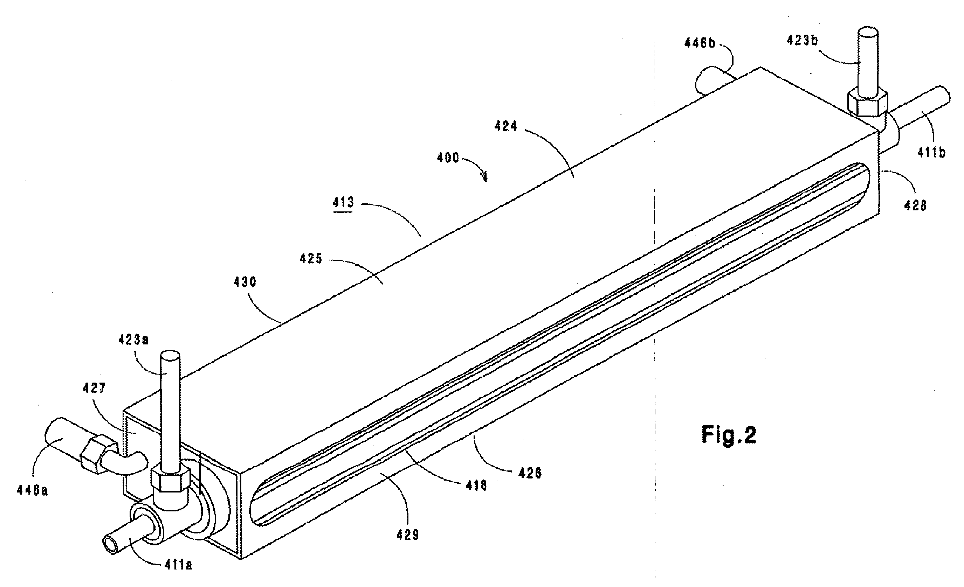

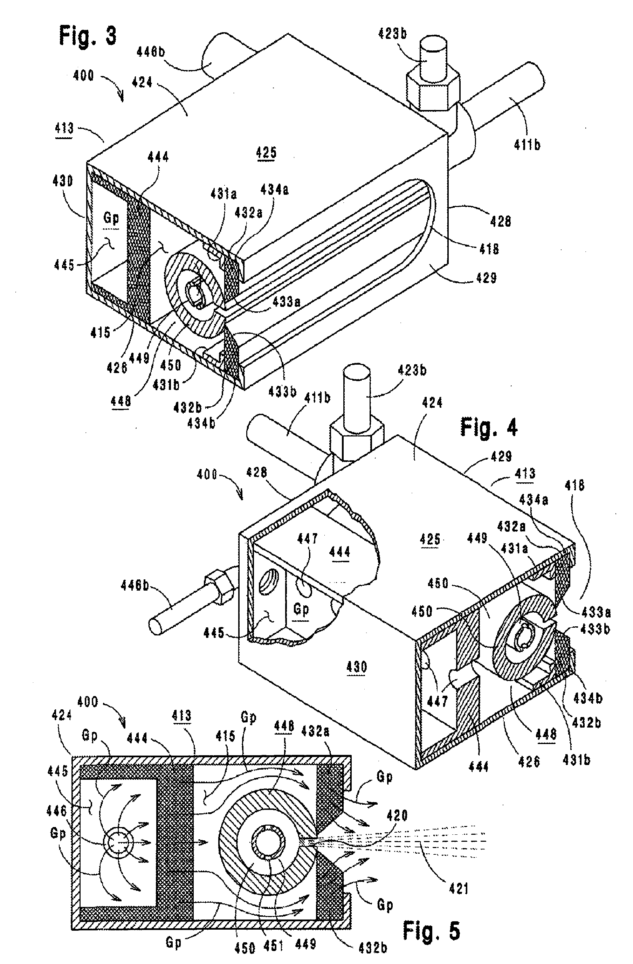

Figures 2-5 show another embodiment of the present invention, which comprises a frost-free spray bar 400. The cryogenic spray bar 400 uses the same principles as the frost-free apparatus disclosed in Figure 1 to provide a frost or ice free exterior surface when spray bar 400 discharges a cryogenic fluid 421 (Figure 5).

Spray bar 400 uses a cryogenic fluid delivery system that is very similar to the that used in U.S. Patent Application No. 11/846,116, which is hereby incorporated by reference as if fully set forth. Cryogenic fluid is supplied to the spray bar 400 through two cryogenic fluid feed lines 411 a, 411 b. Throttling gas is supplied to the spray bar 400 through two throttling gas feed lines 423a, 423b. Cryogenic fluid flows from the cryogenic fluid feed lines 411a, 411b into an inner tube 449, through openings 451 formed in the inner tube 449, into a mixing zone 450, which is a volume located between inner tube 449 and an outer tube 448, then exits the spray bar 400 through an elongated slot 420 (discharge nozzle) in the outer tube 448. Alternatively, a row of small discharge holes may be provided in the outer tube 448, instead of the elongated slot 420. Similarly, the throttling gas flows from the throttling gas feed lines 423a, 423b, into the mixing zone 450, then exits the spray bar 400 through the elongated slot 420. As is more fully explained in U.S. Patent Application No. 11/846,116, the characteristics of the cryogenic fluid discharge 421 that exits the spray bar 400 through the elongated slot 420 can be controlled and manipulated by varying the pressure of the throttling gas provided to the throttling gas feed lines 423a, 423b.

The spray bar 400 includes a casing 413 which houses the throttling gas feed lines 423a, 423b, the cryogenic fluid feed lines 411 a, 411 b, and purge gas feed lines 446a,446b. The casing 413 comprises a nonporous structure 424 (such as aluminum or copper or stainless steel channel) having a top 425 and bottom 426, a first end, 427 and second end 428, and a discharge section 429 opposite a manifold section 430. The discharge section 429, includes an elongated opening 418, which is preferably larger than the elongated slot 420 (discharge nozzle) of the outer tube 448. Angle members 431 a and 431 b are fixed to the casing 413 and positioned inboard from the discharge section 429 to provide a gap or space 434a and 434b there between.

The casing 413 also includes a first wall or microporous lip 432a, is fixed within and extends downward from space 434a so that lip 432a overlaps or extends into elongated opening 418. A second wall or microporous lip 432b, is fixed within and extends upward from space 434b so that lip 432b overlaps or extends into elongated opening 418. In alternative embodiments, the microporous lips 432a,432b could be bonded or otherwise fastened to the casing 413 and angle members 431a and 431b could be omitted (as shown in Figure 5).

Each lip 432a and 432b includes a tapered end 433a and 433b that engages the outside surface of outer tube 448, and seals chamber 415 (purge volume) adjacent the elongated opening 418. In this embodiment, the tapered ends 433a and 433b are angled to provide an opening that expands in the direction of flow of the cryogenic fluid discharge 421 (from left to right in Figure 5).

The manifold section 430 includes a baffle 444 within casing 413 that forms a plenum 445. The plenum 445 provides an evenly-dispersed flow of purge gas Gp from feed lines 446a, 446b, to the discharge section 429 of the casing 413 and through the microporous lips 432a, 432b. The baffle 444 may comprise any suitable microporous material (as shown in Figures 3 and 5), or alternatively, baffle 444 may comprise a nonconductive, nonporous material with one or more apertures 447 to provide a flow of pressurized purge gas Gp from plenum 445 to discharge section 429 (as illustrated in Figure 4). The general direction of flow of the purge gas Gp through the spray bar 400 is shown by the arrows in Figure 5. The incoming flow of purge gas is set at a pressure that enables the gas Gp to permeate chamber 415, diffuse through the micropores in lips 432a and 432b and flow away from the elongated slot 420. The outward flow of purge gas Gp from the lips 432a, 432b is preferably sufficient to prevent ambient air (in the airspace surrounding the spray bar 400) from coming in contact with the elongated slot 420 or opening 418, and therefore, prevents frost or ice formation on the spray bar 400 surfaces.

In this embodiment, the microporous lips (walls) 432a, 432b are located above and below the elongated slot 420, respectively, which provides a flow of purge gas both above and below the cryogenic fluid discharge 421. In general, it is preferable to have microporous walls located on at least two opposing sides of each opening of the discharge nozzle. In embodiments (such as this embodiment), where the discharge nozzle comprises an elongated slot, positioning the microporous walls above and below the slot is sufficient. In embodiments where the discharge nozzle comprises multiple round openings, it may be desirable to have a microporous wall encircle each opening.

Applicants performed test on spray bar 400 having a nozzle with an active spraying length (the slot length or the length of the row of round orifice holes) of 0.75 meters. At LIN spray rates of up to 218 kg/hour and a nitrogen purge gas flow rates ranging from 22.6 cubic meters per hour (800 scfh) to 51 cubic meters per hour (1,800 scfh), no frost formed on the outer tube, including the areas immediately surrounding the nozzle. In fact, under these test conditions, no frost formed on any part of the spray bar. During tests using a reduced nitrogen purge gas flow rate of 12.3 cubic meters per hour (434 scfh), about 10% of the outer tube developed frost around nozzle exits after 20 minutes of continuous LIN flow. During tests without any nitrogen purge gas flowing, the entire front side of the outer tube develops heavy frosting and icicles around the LIN nozzles within the first few minutes of operation. Therefore, cryogenic spray devices, such as the spray bar 400, are capable of operating for significant periods of time (e.g., well in excess of 30 minutes) in ambient air environments having significant relatively humidity (e.g., 30% and above) without any significant frost formation on the discharge nozzle or on the surfaces surrounding the discharge nozzle.

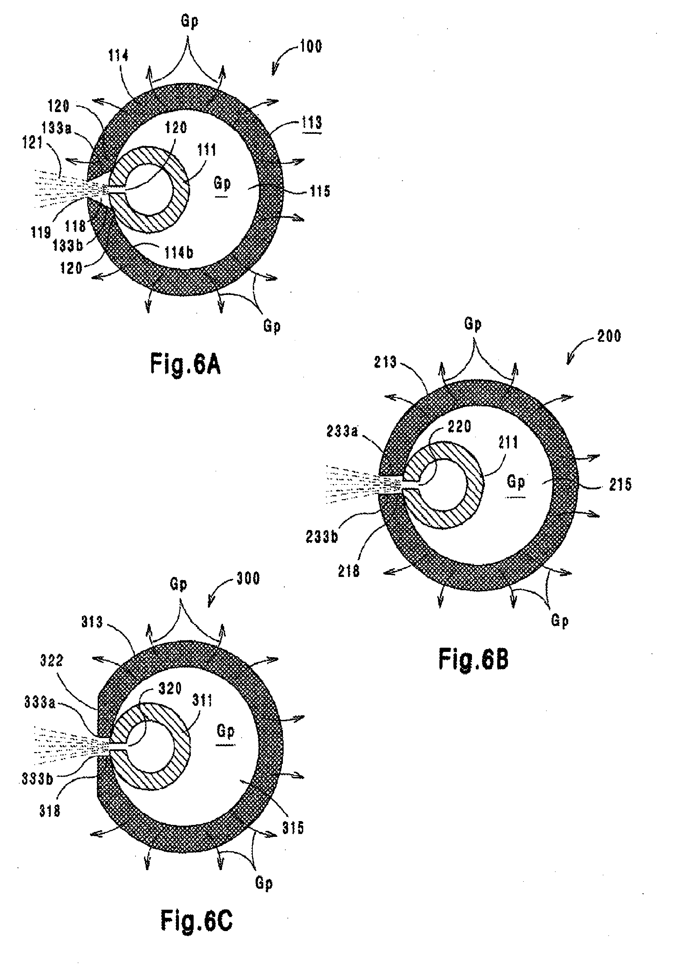

Figures 6A-6C show transverse cross-sections of three different cryogenic spray devices 100, 200, and 300, each of which comprise a casing 113, 213, 313 and a single cryogenic spray tube 111, 211, 311. Referring to Figure 6A, the casing 113 for spray device 100 comprises a suitable microporous material which encloses the spray tube 111. The spray tube 111 delivers and discharges a cryogenic fluid 121 through a discharge nozzle comprising plurality of spaced apart nozzle apertures 120 that extend through the wall of the spray tube 111. The casing 113 includes openings 118 which overlap and are preferably larger than each of the nozzle apertures 120. Alternatively, an elongated slot could be used instead of the plurality of nozzle apertures 120. In that case, an elongated opening in the casing 113 could also be provided instead of the openings 118.

The interior chamber or purge volume 115 of the casing 113 is purged with an inflow of room-temperature inert gas Gp at an elevated pressure. The chamber or purge volume 115 is preferably sealed at both ends in a manner similar to that shown in Figure 1. The spray tube 111 preferably contacts surface 114b adjacent opening 118 which provides sealed edges 117a,117b adjacent to each nozzle aperture 120 to prevent purge gas Gp from venting or escaping from purge volume 115 except through the casing 113. Each opening 118 in the casing 113 includes walls 133a, 133b which taper in the direction of flow (right to left in Figure 6A) of the cryogenic fluid 121 discharge.

The flow of purge gas Gp through openings 118 prevents frost formation in same manner as the lips 432a, 432b of the spray bar 400. In addition, the purge gas Gp permeates the purge volume 115, diffuses through the wall 114 of the casing 113 and disperse into the atmosphere and to prevent a build-up of frost or ice on the exterior surface of the casing 113 in the same manner as the supply line 10.

The cryogenic spray devices 200, 300 shown in Figures 6B and 6C have openings 218, 318, respectively, which are shaped differently than cryogenic spray device 100, but are otherwise identical to cryogenic spray device 100. Cryogenic spray device 200 includes openings 218 that are not tapered (i.e., the walls 233a, 233b are parallel). Cryogenic spray device 300 includes a planar portion 322 along a length of casing 313 and is otherwise identical to cryogenic spray device 200.

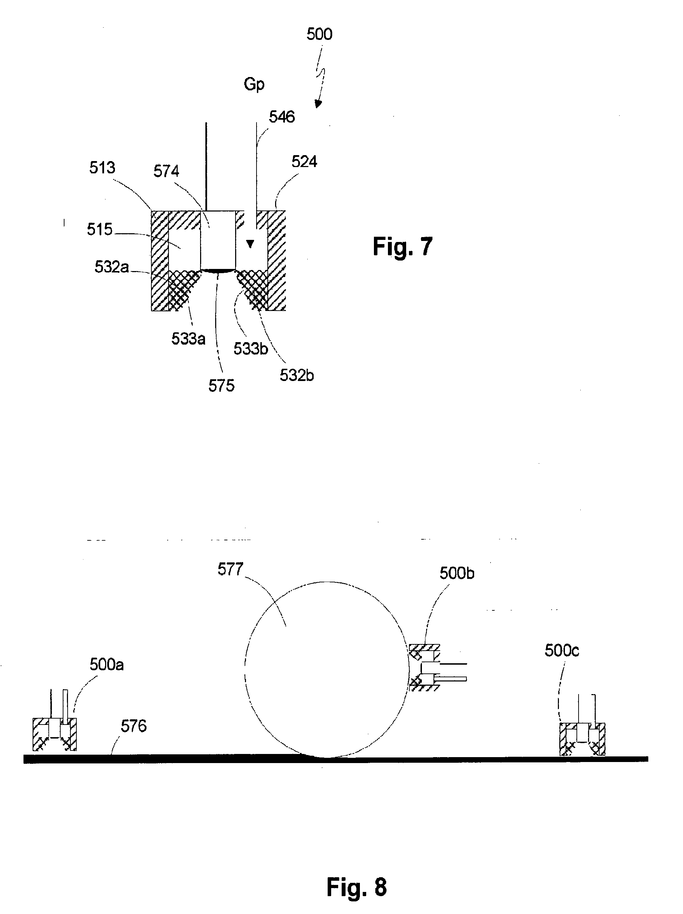

Figure 7 shows another embodiment of the invention, which comprises an infrared (IR) temperature sensor assembly 500, including an infrared sensor 574 having a lens 575 and a casing 513 having a non-porous or, optionally, porous portion 524 and a gas-permeable, porous portions 532a, 532b. The overall structure of the assembly 500 is similar to that of the frost-free spray bar 400. The gas-permeable portions 532a, 532b of the casing 513 each include a tapered end 533a, 533b that engages the outer surface of the IR sensor 574 and is angled to provide an opening that expands in a direction moving away from the lens 575 (downward in Figure 7). The casing 513 defines a chamber 515 which is in fluid communication with a supply line 546 of purge gas Gp. Purge gas Gp flows into the chamber 515 from the supply line 546, then outwardly through the gas-permeable portions 532a, 532b. Alternatively, the entire casing 513 could be formed of a gas-permeable material.

In order to reduce measurement errors of low-temperature, reflective target surfaces due to radiation from the gas-permeable portions 532a, 532b, the purge gas Gp is preferably supplied in this embodiment at a temperature that is lower than the temperature of the surface being measured. For example, if the IR sensor 574 is being used to measure temperature on a reflective, i.e. shiny metal strip having a surface temperature of 0 degrees C, it would be preferable to supply the purge gas Gp at a temperature below 0 degrees C (e.g., -30 degrees C). Further, in order to reduce measurement errors due to penetration of ambient light, the IR sensor assembly 500 is preferably placed as close as possible to the target surface being measured.

Figure 8 schematically shows an example of an application for or a method of using the IR sensor assembly 500. In Figure 8, a cold-rolled metal strip 576 is being rolled by a polished roller 577. A first IR sensor assembly 500a is positioned just above the strip 576, before the strip 576 passes under the roller 577. A second IR sensor assembly 500b is positioned adjacent to the surface of the roller 577. A third IR sensor assembly 500c is positioned just above the strip 576, after the strip 576 passes under the roller 577. Accordingly, the three IR sensor assemblies 500a, 500b, 500c provide accurate differential and absolute readings of the temperature of the strip 576 prior and after being rolled, as well as temperature readings for the surface of the roll. Preferably, this temperature data is sent to a programmable logic controller (PLC) and used to control the spray characteristics of one or more cryogenic spray devices (not shown), each of which provide cooling for the strip 576 or roller 577.

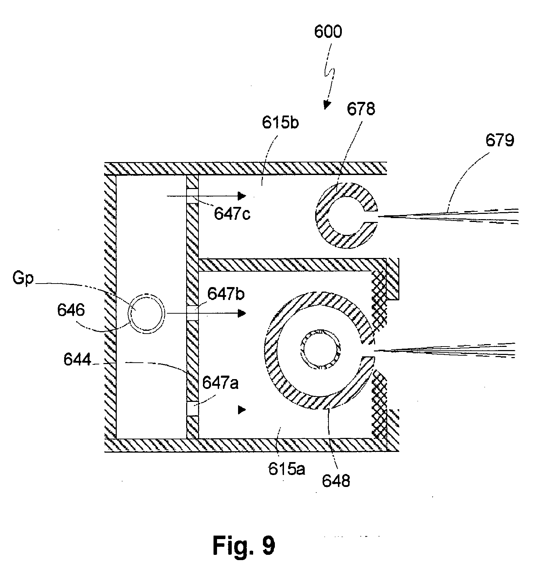

Figure 9 shows another embodiment of the invention, which comprises an integrated co-spraying device 600. The co-spraying device 600 is very similar in structure to the frost-free spray bar 400 shown in Figure 4, but adds a second fluid spray tube 678, located in a second chamber 615b and above the cryogenic spray tube 648. The spray tube 678 is intended to spray a lubricant 679. In alternate embodiments, the spray tube 678 could be used to spray another substance that could be advantageously co-sprayed with a cryogenic fluid, such as paint, for example. A baffle 644 extends along the rear of both chambers 615a, 615b and apertures 647a, 647b, 647c are provided to allow purge gas Gp to flow from a supply line 646 into the chambers 615a, 615b. As can be seen in Figure 9, the purge gas Gp provides frost-prevention for the cryogenic spray tube 648 and serves as a propellant for the lubricant 679 being sprayed from the spray tube 678. Freezing of the lubricant inside tube 678 is also prevented. Preferably, the co-spraying device 600 is configured (i.e., the relative position of the spray tube 678 and cryogenic spray tube 648) so that a low-viscosity, easy to wash lubricant or other substance is deposited first on the surface being treated where it easily spreads, then the surface is cooled by the cryogenic spray to increase viscosity of the lubricant and, consequently, it's load-bearing resistance desired inside the roller-strip contact zone.

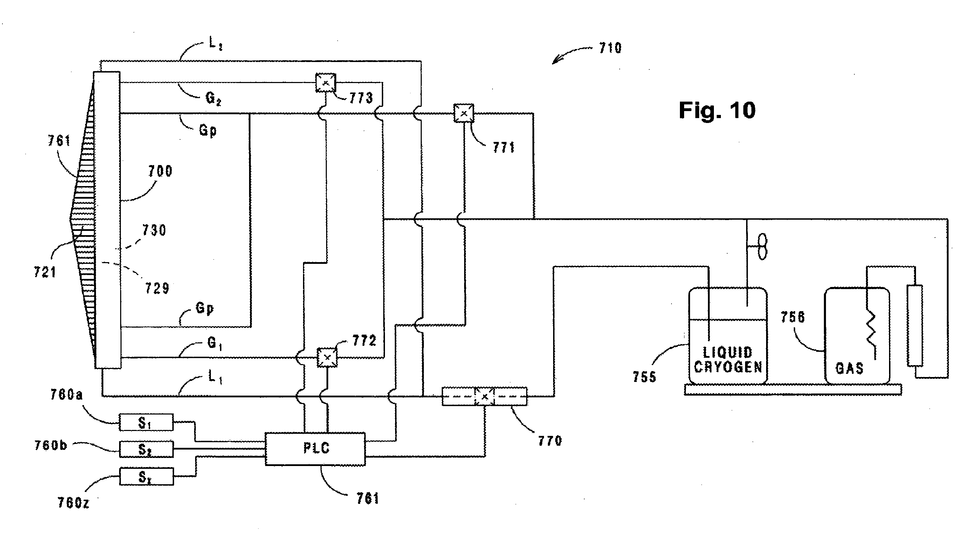

Figure 10 shows an example of a cryogenic liquid spray system 710 that incorporates the frost-free features of the present invention, as well as the spray profile control features disclosed in U.S. Patent Application No. 11/846,116. The system 710 includes a spray bar 700, a liquid cryogen supply tank 755, another liquid cryogen supply tank 756 maintained at a pressure higher than tank 755 and used as a source of inert gas, one or more process sensors 760a, 760b, through 760z (S₁ - Sₓ), and a programmable logic controller (PLC) 762. The spray bar 700 includes a discharge section 729 and a manifold section 730 similar to spray bar 400 in Figures 2-5. Spray bar 700 is adapted to provide any one of a number of spray profiles, including non-linear spray profiles. Any exemplary non-linear spray profile 761 (providing greater cooling at the center of the profile than at either end) is shown in Figure 7. The liquid stream L₁ and optional stream L₂ are supplied from a tank 755 that contains a supply of LIN, and the total flowrate of these streams is controlled with a valve 770. The purge gas Gp is supplied from the inert gas sourcing tank, 756, and the flow of purge gas is controlled by an on/off or proportional valve 771. The inert gas supply line coming from the gas-sourcing liquid cryogen supply tank 756 may also include an optional vaporizer. The throttling gas streams G₁ and optional G₂ are supplied from the same inert gas sourcing tank 756 and regulated with two independently controlled on/off or proportional valves 772 and 773.

Adjustment of the throttling gas proportional valves 772 and 773 modifies the spray pattern dispersed from the discharge section 729 of spray bar 700. For example, when the liquid cryogen control valve 770 and throttling gas proportional valves 772 and 773 are at the full open position, no cryogen fluid 721 is dispersed from spray bar 700, only inert gas flows from the discharge section of the spray bar. On the other hand, when the throttling gas proportional valves 772 and 773 are completely closed with the cryogen valve 770 fully open, only cryogen fluid 721 is dispersed from discharge section 729, and the cryogen fluid is dispersed in an even or flat spray pattern. Accordingly, the throttling gas proportional valves 772 and 773 may be individually or uniformly adjusted to provide a different mixtures of cryogen fluid 721 within spray bar 700 that produce various spray patterns, for example spray pattern (profile) 761.

The PLC 762 is preferably adapted to control the cryogenic fluid valve 770, the purge gas proportional valve 771, and the throttling gas proportional valves 772 and 773. The PLC 762 could adjust valves 770 through 773 based on user input, a pre-programmed setting, and/or input from one or more of the process sensors 760a, 760b, through 760z.

As such, an invention has been disclosed in terms of preferred embodiments and alternate embodiments thereof, which fulfills each one of the objects of the present invention as set forth above and provides frost-free surfaces in cryogenic delivery systems. Of course, various changes, modifications, and alterations from the teachings of the present invention may be contemplated by those skilled in the art without departing from the intended spirit and scope thereof. It is intended that the present invention only be limited by the terms of the appended claims.

## Claims

1. An apparatus comprising:
a cryogenic fixture (11, 111, 211, 311, 411) that is adapted carry a cryogenic fluid; and
a casing (13, 113, 213, 313, 413) that envelopes at least a portion of the cryogenic fixture (11, 111, 211, 311, 411), thereby defining a first purge volume between the cryogenic fixture (11, 111, 211, 311, 411) and the casing (13, 113, 213, 313, 413), the casing comprising at least one purge gas inlet (17, 446a, 446b),
wherein the casing comprises
a membrane, the at least one purge gas inlet begin adapted to be connected to a pressurized supply of a purge gas;
wherein the casing (13, 113, 213, 313, 413) is configured so that when the purge gas is introduced into the first purge volume through the at least one purge inlet at a pressure equal to or greater than a minimum operating pressure, at least some of the purge gas diffuses outwardly from the first purge volume through the membrane.

2. The apparatus of claim 1, wherein
a. the casing (13, 113, 213, 313, 413) is configured so that when the purge gas is introduced into the first purge volume through the at least one purge inlet (17, 446a, 446b) at a pressure equal to or greater than the minimum operating pressure, substantially all of the purge gas diffuses outwardly from the first purge volume through the membrane, or
b. wherein the face velocity of the purge gas through the membrane is at least 1 cm/sec when the purge gas is introduced into the first purge volume through the at least one purge inlet at a pressure equal to or greater than a minimum operating pressure, or
c. wherein the volumetric flow rate of the purge gas through the membrane is at least 1 cm/sec per square centimeter when the purge gas is introduced into the first purge volume through the at least one purge inlet at a pressure equal to or greater than a minimum operating pressure, or
d. wherein the minimum operating pressure is no greater than 34.5 kPa (345 millibar; 5psig).

3. The apparatus of claim 1, wherein the membrane causes a pressure drop in the purge gas as the purge gas passes through the membrane, the pressure drop being at least 2.5 millibar (0.25 kPa), and wherein optionally the pressure drop is no greater than 500 millibar (50 kPa).

4. The apparatus of claim 1, wherein
a. the membrane is formed of hydrophobic material or a material that has been treated with a hydrophobic surface agent, or
b. wherein the membrane is formed of a material having a thermal conductivity that is less than 25 W/ m K, or
c. wherein the membrane is a microporous membrane having an average pore size no greater than 500 micrometers, or
d. wherein the dew point of the purge gas is no greater than minus 60 degrees C (213 degrees K), or
e. wherein the cryogenic fixture (11, 111, 211, 311, 411) is selected from the group of a supply pipe, a tube, a flange, an elbow, a tee, a vapor vent, a phase separator, a valve and a gauge regulator.

5. The apparatus of claim 1, wherein the cryogenic fixture (11, 111, 211, 311, 411) is selected from the group of a spray bar, a spray nozzle, a vaporizer and a spray head,

6. The apparatus of claim 5, wherein the cryogenic fixture (11, 111, 211, 311, 411) includes a discharge nozzle that is not covered by the casing (13, 113, 213, 313, 413) and through which cryogenic fluid flows during operation of the cryogenic fixture (11, 111, 211, 311, 411), the discharge nozzle comprising at least one opening, the membrane comprising a first portion and a second portion located on opposing sides of each of the at least one opening of the discharge nozzle, and wherein optionally the first and second portions of the membrane contact the cryogenic fixture (11, 111, 211, 311, 411) on opposing sides of each of the at least one opening of the discharge nozzle.

7. The apparatus of claim 5, further comprising a non-cryogenic spray device that is at least partially enveloped by the casing (13, 113, 213, 313, 413), a second purge volume (445) located between the non-cryogenic spray device and the casing, the second purge volume being in flow communication with the supply of purge gas (Gp), and wherein optionally the non-cryogenic spray device is adapted to spray a fluid selected from the group of a lubricant and a paint.

8. The apparatus of claim 1, wherein the membrane comprises a microporous membrane.

9. The apparatus of claim 1, wherein the membrane is selected from the group of a porous plastic, a polymer, ceramic or metallic foam and a woven fabric.

10. A method for preventing frost formation on a cryogenic fixture (11, 111, 211, 311, 411), the method comprising:
supplying a cryogenic fluid to the cryogenic fixture (11, 111, 211, 311, 411);
supplying a purge gas to a purge volume, the purge volume at least partially enveloping the cryogenic fixture (11, 111, 211, 311, 411), the purge volume being defined by a casing comprising a membrane that is gas-permeable; and
diffusing the purge gas through the membrane.

11. The method of claim 10, wherein
a. the diffusing step comprises diffusing the purge gas through the membrane at a face velocity and volumetric flow rate sufficient to prevent frost formation on the cryogenic fixture (11, 111, 211, 311, 411) and the membrane, or
b. wherein the diffusing step comprises diffusing the purge gas through the membrane at a face velocity of at least 1 cm/sec, or
c. wherein the diffusing step comprises diffusing the purge gas through the membrane at a volumetric flow rate of at least 1 cm/sec per square centimeter, or
d. wherein the step of supplying a purge gas further comprises supplying a purge gas to the purge volume at a pressure that is no less than a minimum operating pressure of 34.5 kPa (345 millibar; 5psig), or
e. further comprising supplying a cryogenic fluid to the cryogenic fixture (11, 111, 211, 311, 411) only when the diffusing step is being performed.

## Patentansprüche

1. Gerät, umfassend:
eine Tieftemperaturaufnahmevorrichtung (11, 111, 211, 311, 411), welche zum Aufnehmen eines Tieftemperaturfluids angepasst ist; und
eine Ummantelung (13, 113, 213, 313, 413), welche mindestens einen Teil der Tieftemperaturaufnahmevorrichtung (11, 111, 211, 311, 411) umhüllt, wobei ein erstes Spülvolumen zwischen der Tieftemperaturaufnahmevorrichtung (11, 111, 211, 311, 411) und der Ummantelung (13, 113, 213, 313, 413) definiert wird, wobei die Ummantelung mindestens einen Spülgaseinlass (17, 446a, 446b) umfasst,
wobei die Ummantelung umfasst
eine Membran, wobei der mindestens eine Spülgaseinlass so angepasst ist, dass er mit einer unter Druck stehenden Zufuhr eines Spülgases verbunden ist;
wobei die Ummantelung (13, 113, 213, 313, 413) so konfiguriert ist, dass, wenn das Spülgas in das erste Spülvolumen über den mindestens einen Spüleinlass bei einem Druck von gleich oder höher als ein minimaler Betriebsdruck eingebracht wird, mindestens etwas von dem Spülgas nach außen von dem ersten Spülvolumen durch die Membran diffundiert.

2. Gerät nach Anspruch 1, wobei
a. die Ummantelung (13, 113, 213, 313, 413) so konfiguriert ist, dass, wenn das Spülgas in das erste Spülvolumen über den mindestens einen Spüleinlass (17, 446a, 446b) bei einem Druck von gleich oder höher als der minimale Betriebsdruck eingebracht wird, im Wesentlichen das gesamte Spülgas nach außen von dem ersten Spülvolumen durch die Membran diffundiert, oder
b. wobei die Einströmgeschwindigkeit des Spülgases durch die Membran mindestens 1 cm/s beträgt, wenn das Spülgas in das erste Spülvolumen über den mindestens einen Spüleinlass bei einem Druck von gleich oder höher als ein minimaler Betriebsdruck eingebracht wird, oder
c. wobei die Volumengeschwindigkeit des Spülgases durch die Membran mindestens 1 cm/s pro Quadratzentimeter beträgt, wenn das Spülgas in das erste Spülvolumen über den mindestens einen Spüleinlass bei einem Druck von gleich oder höher als ein minimaler Betriebsdruck eingebracht wird, oder
d. wobei der minimale Betriebsdruck nicht höher als 34,5 kPa (345 Millibar; 5 psig) ist.

3. Gerät nach Anspruch 1, wobei die Membran einen Druckabfall in dem Spülgas verursacht, wenn das Spülgas durch die Membran passiert, wobei der Druckabfall mindestens 2,5 Millibar (0,25 kPa) beträgt, und wobei der Druckabfall gegebenenfalls nicht mehr als 500 Millibar (50 kPa) beträgt.

4. Gerät nach Anspruch 1, wobei
a. die Membran aus einem hydrophoben Material oder einem Material, das mit einem hydrophoben Oberflächenmittel behandelt wurde, gebildet ist, oder
b. wobei die Membran aus einem Material mit einer Wärmeleitfähigkeit, die niedriger als 25 W/ m K ist, gebildet ist, oder
c. wobei die Membran eine mikroporöse Membran mit einer mittleren Porengröße von nicht höher als 500 Mikrometer ist, oder
d. wobei der Taupunkt des Spülgases nicht höher als minus 60 Grad C (213 Grad K) ist, oder
e. wobei die Tieftemperaturaufnahmevorrichtung (11, 111, 211, 311, 411) aus der Gruppe von einer Zuleitung, einem Rohr, einem Flansch, einem Rohrbogen, einem T-förmigen Rohrstück, einer Dampfentlüftungsvorrichtung, einer Phasentrennvorrichtung, einem Ventil und einem Messgerätregler ausgewählt ist.

5. Gerät nach Anspruch 1, wobei die Tieftemperaturaufnahmevorrichtung (11, 111, 211, 311, 411) aus der Gruppe von einem Sprühbalken, einer Sprühdüse, einer Verdampfungsvorrichtung und einem Sprühkopf ausgewählt ist.

6. Gerät nach Anspruch 5, wobei die Tieftemperaturaufnahmevorrichtung (11, 111, 211, 311, 411) eine Austrittsdüse einschließt, die nicht von der Ummantelung (13, 113, 213, 313, 413) bedeckt wird und durch welche Tieftemperaturfluid während des Betriebs der Tieftemperaturaufnahmevorrichtung (11, 111, 211, 311, 411) fließt, wobei die Austrittsdüse mindestens eine Öffnung umfasst, wobei die Membran einen ersten Teil und einen zweiten Teil, lokalisiert auf gegenüberliegenden Seiten jeweils der mindestens einen Öffnung der Austrittsdüse umfasst, und wobei die ersten und zweiten Teile der Membran gegebenenfalls mit der Tieftemperaturaufnahmevorrichtung (11, 111, 211, 311, 411) auf gegenüberliegenden Seiten jeweils der mindestens einen Öffnung der Austrittsdüse in Kontakt stehen.

7. Gerät nach Anspruch 5, ferner umfassend eine Nicht-Tieftemperatur-Sprühvorrichtung, welche mindestens teilweise durch die Ummantelung (13, 113, 213, 313, 413) umhüllt wird, ein zweites Spülvolumen (445), lokalisiert zwischen der Nicht-Tieftemperatur-Sprühvorrichtung und der Ummantelung, wobei das zweite Spülvolumen in Strömungskommunikation mit der Zufuhr des Spülgases (Gp) steht, und wobei die Nicht-Tieftemperatur-Sprühvorrichtung gegebenenfalls so angepasst ist, dass sie ein Fluid sprüht, welches aus der Gruppe von einem Schmiermittel und einem Anstrichmittel ausgewählt ist.

8. Gerät nach Anspruch 1, wobei die Membran eine mikroporöse Membran umfasst.

9. Gerät nach Anspruch 1, wobei die Membran aus der Gruppe von einem porösen Kunststoff, einem Polymer, einer Keramik oder einem Metallschaum und einem Gewebe ausgewählt ist.

10. Verfahren zum Verhindern von Frostbildung auf einer Tieftemperaturaufnahmevorrichtung (11, 111, 211, 311, 411), wobei das Verfahren umfasst:
Zuführen eines Tieftemperaturfluids zu der Tieftemperaturaufnahmevorrichtung (11, 111,211,311,411);
Zuführen eines Spülgases zu einem Spülvolumen, wobei das Spülvolumen mindestens teilweise die Tieftemperaturaufnahmevorrichtung (11, 111, 211, 311, 411) umhüllt, wobei das Spülvolumen durch eine Ummantelung definiert wird, umfassend eine Membran, die gaspermeabel ist; und
Diffundieren des Spülgases durch die Membran.

11. Verfahren nach Anspruch 10, wobei
a. der Diffusionsschritt Diffundieren des Spülgases durch die Membran mit einer Einströmgeschwindigkeit und Volumengeschwindigkeit, die ausreichend sind, Frostbildung auf der Tieftemperaturaufnahmevorrichtung (11, 111, 211, 311, 411) und der Membran zu verhindern, umfasst, oder
b. wobei der Diffusionsschritt Diffundieren des Spülgases durch die Membran mit einer Einströmgeschwindigkeit von mindestens 1 cm/s umfasst, oder
c. wobei der Diffusionsschritt Diffundieren des Spülgases durch die Membran mit einer Volumengeschwindigkeit von mindestens 1 cm/s pro Quadratzentimeter umfasst, oder
d. wobei der Schritt des Zuführens eines Spülgases ferner Zuführen eines Spülgases zu dem Spülvolumen bei einem Druck, der nicht niedriger als ein minimaler Betriebsdruck von 34,5 kPa (345 Millibar; 5 psig) ist, umfasst, oder
e. ferner umfassend Zuführen eines Tieftemperaturfluids zu der Tieftemperaturaufnahmevorrichtung (11, 111, 211, 311, 411), nur wenn der Diffusionsschritt durchgeführt wird.

## Revendications

1. Un appareil comprenant:
une pièce fixe cryogénique (11, 111, 211, 311, 411), qui est adaptée pour transporter un liquide cryogénique et
un boîtier (13, 113, 213, 313, 413), qui enveloppe au moins une partie de la pièce fixe cryogénique (11, 111, 211, 311, 411), en déterminant ainsi un premier volume de purge entre la pièce fixe cryogénique (11, 111, 211, 311, 411) et le boîtier (13, 113, 213, 313, 413), celui-ci comprenant au moins une admission de gaz de purge (17, 446a, 446b),
dans lequel le boîtier comprend
une membrane, la au mois une admission de gaz de purge étant adaptée pour être connectée à une alimentation de gaz de purge sous pression;
dans lequel le boîtier (13, 113, 213, 313, 413) est configuré de manière telle que lorsque le gaz de purge est introduit dans le premier volume de purge via la au moins une admission de purge à une pression égale ou supérieure à une pression de fonctionnement minimale, au moins une partie du gaz de purge diffuse à l'extérieur à partir du premier volume de purge au travers de la membrane.

2. L'appareil de la revendication 1, dans lequel
a. le boîtier (13, 113, 213, 313, 413) est configuré de manière telle que lorsque le gaz de purge est introduit dans le premier volume de purge via la au moins une admission de purge (17, 446a, 446b) à une pression égale ou supérieure à la pression de fonctionnement minimale, la quasi-totalité du gaz de purge diffuse à l'extérieur à partir du premier volume de purge au travers de la membrane, ou
b. dans lequel la vitesse frontale du gaz de purge au travers de la membrane est d'au moins 1 cm/sec lorsque le gaz de purge est introduit dans le premier volume de purge via la au moins une admission de purge à une pression égale ou supérieure à une pression de fonctionnement minimale, ou
c. dans lequel le débit volumétrique du gaz de purge au travers de la membrane est d'au moins 1 cm/sec par centimètre carré lorsque le gaz de purge est introduit dans le premier volume de purge via la au moins une admission de purge à une pression égale ou supérieure à une pression de fonctionnement minimale, ou
d. dans lequel la pression de fonctionnement minimale n'est pas supérieure à 34,5 kPa (345 millibar; 5 psig).

3. L'appareil de la revendication 1, dans lequel la membrane induit une chute de pression du gaz de purge lorsque celui-ci traverse la membrane, la chute de pression s'élevant au moins à 2,5 millibar (0,25 kPa), et dans lequel la chute de pression n'est facultativement pas supérieure à 500 millibar (50 kPa).

4. L'appareil de la revendication 1, dans lequel
a. la membrane est formée d'une matière hydrophobe ou d'une matière qui a été traitée par un agent tensioactif hydrophobe, ou
b. dans lequel la membrane est formée d'une matière possédant une conductivité thermique qui est inférieure à 25 W/m.K, ou
c. dans lequel la membrane est une membrane microporeuse présentant un diamètre de pore moyen qui n'est pas supérieur à 500 micromètres, ou
d. dans lequel le point de rosée du gaz de purge n'est pas supérieur à moins 60 degrés centigrades (213 degrés K), ou
e. dans lequel la pièce fixe cryogénique (11, 111, 211, 311, 411) est choisie parmi le groupe se composant d'un tuyau d'alimentation, d'un tube, d'une bride, d'un coude, d'un té, d'un évent de vapeur, d'un séparateur de phases, d'une soupape et d'un régulateur à manomètre.

5. L'appareil de la revendication 1, dans lequel la pièce fixe cryogénique (11, 111, 211, 311, 411) est choisie parmi le groupe se composant d'une rampe de pulvérisation, d'une buse de pulvérisation, d'un vaporiseur et d'une tête de pulvérisation.

6. L'appareil de la revendication 5, dans lequel la pièce fixe cryogénique (11, 111, 211, 311, 411) comprend une buse d'évacuation, qui n'est pas recouverte par le boîtier (13, 113, 213, 313, 413), et au travers de laquelle le liquide cryogénique s'écoule pendant le fonctionnement de la pièce fixe cryogénique (11, 111, 211, 311, 411), la buse d'évacuation comprenant au moins une ouverture, la membrane comprenant une première partie et une seconde partie situées aux côtés opposés de chacune de la au moins une ouverture de la buse d'évacuation et dans lequel, les première et seconde parties de la membrane sont facultativement en contact avec la pièce fixe cryogénique (11, 111, 211, 311, 411) aux côtés opposés de chacune de la au moins une ouverture de la buse d'évacuation.

7. L'appareil de la revendication 5, comprenant en outre un dispositif de pulvérisation non cryogénique qui est au moins partiellement enveloppé par le boîtier (13, 113, 213, 313, 413), un second volume de purge (445) situé entre le dispositif de pulvérisation non cryogénique et le boîtier, le second volume de purge étant en communication d'écoulement avec l'alimentation de gaz de purge (Gp) et dans lequel le dispositif de pulvérisation non cryogénique est facultativement adapté pour pulvériser un liquide choisi parmi le groupe se composant d'un lubrifiant et d'une peinture.

8. L'appareil de la revendication 1, dans lequel la membrane comprend une membrane microporeuse.

9. L'appareil de la revendication 1, dans lequel la membrane est choisie parmi le groupe se composant d'un plastique poreux, d'un polymère, d'une mousse céramique ou métallique et d'un tissu.

10. Une méthode pour empêcher la formation de givre sur une pièce fixe cryogénique (11, 111, 211, 311, 411), la méthode comprenant:
l'alimentation d'un liquide cryogénique à la pièce fixe cryogénique (11, 111, 211, 311, 411);
l'alimentation d'un gaz de purge à un volume de purge, ce dernier enveloppant au moins partiellement la pièce fixe cryogénique (11, 111, 211, 311, 411), le volume de purge étant déterminé par un boîtier comprenant une membrane qui est perméable aux gaz; et
la diffusion du gaz de purge au travers de la membrane.

11. La méthode de la revendication 10, dans laquelle
a. l'étape de diffusion comprend la diffusion du gaz de purge au travers de la membrane avec une vitesse frontale et un débit volumétrique suffisants pour empêcher la formation de givre sur la pièce fixe cryogénique (11, 111, 211, 311, 411) et la membrane, ou
b. dans laquelle l'étape de diffusion comprend la diffusion du gaz de purge au travers de la membrane avec une vitesse frontale d'au moins 1 cm/sec, ou
c. dans laquelle l'étape de diffusion comprend la diffusion du gaz de purge au travers de la membrane avec un débit volumétrique d'au moins 1 cm/sec par centimètre carré, ou
d. dans laquelle l'étape d'alimentation d'un gaz de purge comprend en outre l'alimentation d'un gaz de purge au volume de purge à une pression qui n'est pas inférieure à une pression de fonctionnement minimale de 34,5 kPa (345 millibar; 5 psig), ou
e. comprenant en outre l'alimentation d'un liquide cryogénique à la pièce fixe cryogénique (11, 111, 211, 311, 411) seulement lorsque l'étape de diffusion est exécutée.
